# EUROPÄISCHE PATENTSCHRIFT

(11) **EP 3 313 654 B1**
(45) Veröffentlichungstag und Bekanntmachung des Hinweises auf die Patenterteilung: **15.12.2021**
(21) Anmeldenummer: 16745604.5
(22) Anmeldetag: 22.06.2016
(51) Int. Cl.: B21D 39/04, G05B 19/406, B30B 15/26

(54) **VERFAHREN ZUR ERMITTLUNG EINER EINSATZKENNZAHL EINES PRESSWERKZEUGS IN EINER FÜGEPRESSE**
METHOD FOR CALCULATING A USAGE FIGURE FOR A PRESSING TOOL IN A JOINING PRESS
PROCÉDÉ DE DÉTERMINATION D'UNE CARACTÉRISTIQUE D'UTILISATION D'UN OUTIL DE MOULAGE PAR COMPRESSION D'UNE PRESSE D'ASSEMBLAGE

(30) Priorität: 23.06.2015 AT 505252015
(43) Veröffentlichungstag der Anmeldung: 02.05.2018
(73) Patentinhaber: Henn GmbH & Co KG., 6850 Dornbirn (AT)
(72) Erfinder: MOOSBRUGGER, Christian, 6870 Bezau (AT); GRAZIADEI, Thomas, 6850 Dornbirn (AT)
(74) Vertreter: Burger, Hannes
(86) Internationale Anmeldenummer: PCT/AT2016/050218
(87) Internationale Veröffentlichungsnummer: WO 2016/205846

(56) Entgegenhaltungen:
- EP-A- 1 734 428
- EP-A2- 0 860 223
- EP-A2- 2 025 475
- WO-A1-2012/162014
- WO-A2-2004/109461
- CN-B- 103 230 977
- CZ-B6- 304 771
- DE-B3-102013 203 553

## Beschreibung

Die Erfindung betrifft ein Verfahren zur Ermittlung einer Einsatzkennzahl eines Presswerkzeugs in einer Fügepresse und eine Fügepresse zur Durchführung des Verfahrens.

Fügeverpressungen, wie beispielsweise Crimp-Verbindungen, sind besonders vorteilhaft geeignet, unterschiedliche und insbesondere nicht direkt miteinander verbindbare Materialien, dauerhaft zu verbinden. Insbesondere eignen sich Crimp-Verbindungen besonders dazu, Anschlüsse oder Steckverbindungen auf Kabel, Leitungen oder Rohre anzubringen, beispielsweise eine metallische Steckverbindung auf einen Gummischlauch. Entscheidend für die Haltbarkeit und Stabilität der Fügeverpressung ist die Einhaltung der Verpressparameter, insbesondere eine ausreichende, jedoch keinesfalls zu starke Verpressung. Die Verpressung wird dabei mittels eines sehr spezifischen Presswerkzeugs durchgeführt, welches von einem Druckmittel angetrieben, die Kraft auf einen Verpressungsbereich lenkt. Die Schwierigkeit bzw. Herausforderung besteht teilweise darin, dass aufgrund der Platzverhältnisse, die Presskraft vom Druckmittel bis zur Verpressungsstelle über einen weiten Weg und/oder einen großen Hebelweg gelenkt werden muss. Dies kann zu Abnützungserscheinungen am Presswerkzeug führen, wodurch unter Umständen die Verpressparameter nicht mehr korrekt eingehalten werden können und somit die Haltbarkeit der Fügeverpressung beeinträchtigt ist. Es ist daher erforderlich, das Presswerkzeug rechtzeitig vor Erreichen einer kritischen Abnutzung auszutauschen und einem Service zu unterziehen.

Beispielsweise zeigt die US 2015/039447 A einen Extruder mit einer Extruderschnecke, wobei die Extruderschnecke ein kennzeichnendes Informationselement in Form eines RFID-Chips aufweist. Mit Hilfe dieses Chips lässt sich ermitteln, wie lange eine Extruderschnecke bereits in Betrieb war bzw. welche Servicearbeiten durchzuführen sind.

Aus der DE 10 2013 005417 A1 ist eine hydraulische Einheit mit einem geschlossenen Druckmittelvolumen bekannt, bei der in Abhängigkeit wenigstens einer Prozessgröße oder Zustandsgröße der Hydraulikeinheit, eine Abnutzung der Hydraulikeinheit ermittelbar ist.

Aus der US 2010/320632 A ist eine Überwachungsvorrichtung für eine Gussform bekannt, bei der die Anzahl der Gussvorgänge, insbesondere das Verhältnis der Einsatzdauer zur Ruhedauer, ermittelt wird.

Aus der DE 10 2009 01 09 83 A1 ist bekannt, die Abnutzung eines Reifen mittels eines RFID-Transponders zu ermitteln.

Die DE 10 2013 203553 B3 offenbart eine Fügepresse mit einem Presswerkzeug, sowie ein Verfahren zum Verbinden eines Rohrs mit einem Werkstück. Zur Qualitätssicherung wird das verwendete Presswerkzeug, sowie das bei einer Verpressung verwendete Rohr und Fitting mitsamt den Verpressungsdaten, wie etwa Presskraft aufgezeichnet. Dies dient zur Qualitätssicherung, um eine zuverlässige Prüfung des Verpressvorganges durchführen und nachweisen zu können. Außerdem wird die Anzahl der von der Fügepresse durchgeführten Verpressungen abgespeichert.

Die EP 0 860 223 A2 offenbart eine Fügepresse mit einem Presswerkzeug, sowie ein Verfahren zum Verbinden eines Rohrs mit einem Werkstück. Weiters ist am Presswerkzeug ein Speicherchip vorgesehen, an welchem die Anzahl der Verpressungen gespeichert werden kann, um den Verschleißzustand des Presswerkzeuges zu bestimmen.

Die EP1 734 428 A2 offenbart ein Verfahren zur Ermittlung einer Einsatzkennzahl eines Presswerkzeugs in einer Fügepresse gemäss dem Oberbegriff des Anspruchs 1 und eine Fügepresse gemäss dem Oberbegriff des Anspruchs 11.

Aus dem Stand der Technik sind Vorrichtungen und Verfahren bekannt, mit denen sich die Abnutzung bzw. ein anstehender Service, aufgrund der Einsatzdauer bzw. Nutzungsanzahl ermitteln lässt. Mit diesen Ausführungen kann eine Abnutzung ermittelt werden, die ausschließlich auf einer rein statischen, taktbasierten Benutzungsermittlung basiert. Einflüsse wie sie durch die dynamische Belastung während des Verpessvorgangs auftreten können, werden mit den bekannten Vorrichtungen und Verfahren nicht ermittelt. Treten während der Verpressvorgänge überwiegend sehr gleichförmige Kraftverläufe auf, insbesondere keine Kraftspitzen, wird nach den bekannten Methoden ein Servicefall eventuell zu früh angezeigt. Umgekehrt kann es vorkommen, dass aufgrund auftretender Kraftspitzen bzw. kurzzeitiger Überlastungen, ein Presswerkzeug bereits deutlich über seiner Einsatzdauer ist, und der Servicefall somit unbedingt ausgelöst werden müsste. Der Stand der Technik berücksichtigt keine dynamischen Einflüsse aufgrund abweichender Maximalkraftwerte bzw. abweichender Kraftverläufe. Das dynamische Verhalten hat jedoch einen bedeutenden Einfluss auf einen ermittelten Servicezeitpunkt.

Die Aufgabe der Erfindung liegt also darin, ein Verfahren zu finden, mit dem ein Servicezeitpunkt eines Bearbeitungswerkzeugs gefunden werden kann, sodass das Bearbeitungswerkzeug möglichst lange unter Einhaltung fertigungsrelevanter Parameter in Verwendung bleiben kann.

Die Aufgabe der Erfindung wird gelöst durch ein Verfahren gemäss Anspruch 1 und durch eine Fügepresse gemäss Anspruch 11.

Das Verfahren umfasst die Schritte, dass von einem Einsatzdauer-Zeitgeber einer Steuerungsvorrichtung der Fügepresse, eine Einsatzzeit ermittelt wird, und dass von einer, an der Fügepresse angeordneten Kraft-Messvorrichtung, während der Durchführung der Verpressung, eine Kraftwirkung ermittelt wird. Ferner wird von einem Analyse-und Auswertemodul der Steuerungsvorrichtung, aus der Einsatzzeit und der wirkenden Kraft, ein Werkzeug-Service-Stand ermittelt. Vom Analyse- und Auswertemodul der Steuerungsvorrichtung wird der Werkzeug-Service-Stand auf einen am Presswerkzeug angeordneten Speicherchip, insbesondere einen RFID-Chip, übertragen.

Mit dieser Ausbildung wird erreicht, dass der Zeitpunkt für einen Service des Presswerkzeugs möglichst optimal ermittelt wird und somit das Presswerkzeug möglichst lange in einem sicheren Betriebszustand bleibt. Da sowohl die Anzahl der durchgeführten Verpressungen, als auch die bei jedem einzelnen Pressvorgang auftretenden Kräfte berücksichtigt werden, kann sehr gut und genau auf eine sich anbahnende Materialermüdung geschlossen werden. Da der aktuelle Nutzungsgrad direkt am Presswerkzeug abgespeichert ist, bleibt dieser auch bei einem Wechsel des Werkzeugs erhalten. Somit kann das Presswerkzeug rechtzeitig einem Service zugeführt werden, bevor es ggf. zu einem irreversiblen Schaden kommt.

Bei einem erneuten Einsatz des Presswerkzeugs wird der hinterlegte Werkzeug-Service-Stand aus dem Speicherchip ausgelesen und geprüft, ob das ggf. bereits einen kritischen Service-Stand erreicht hat. Es ist somit auch prüfbar bzw. abschätzbar, ob das Werkzeug für die geplante Anzahl von Verpressungen eine ausreichende Einsatzreserve aufweist.

Eine Weiterbildung besteht darin, dass die Einsatzzeit als Dauer der Kraftwirkung ermittelt wird. Diese Weiterbildung hat den Vorteil, dass eine kontinuierliche Abnützung bzw. Materialermüdung erfasst werden kann. Da nicht notwendiger Weise jeder Verpressungsvorgang gleich lange dauern wird, kann eine rein Zählung der Verpressungsvorgänge und Berücksichtigung einer festen Dauer, unter Umständen eine abweichende gesamte Nutzungsdauer ergeben. Nach dieser Weiterbildung wird die tatsächliche Dauer der Kraftwirkung für die Ermittlung des Werkzeug-Service-Stands herangezogen.

Nach einer Weiterbildung ist auch vorgesehen, dass die Einsatzzeit als Anzahl der Verpressungsvorgänge ermittelt wird. Eine Materialermüdung- bzw. Abnutzung kann aber auch unabhängig von der genauen Dauer der Verpressungsvorgänge sein, und alleine durch die Anzahl der durchgeführten Verpressungsvorgänge definiert sein. Beispielsweise kann aus Erfahrungswerten bekannt sein, dass sich das Presswerkzeug nach einer Anzahl von x durchgeführten Verpressungsvorgängen soweit abgenützt hat, dass die geforderte Genauigkeit nicht mehr gewährleistet ist und ein Service durchgeführt werden muss.

Ein weiterer, die maximale Einsatzdauer bestimmender Faktor, ist auch die maximale Kraft, die vom Presswerkzeug übertragen wurde. Daher ist nach einer Weiterbildung vorgesehen, dass als Kraftwirkung die Maximalkraft ermittelt wird. Beim Verpressungsvorgang kann es bspw. aufgrund von Materialtoleranzen der zu verpressenden Teile, insbesondere der Materialdicke und/oder der Materialfestigkeit, zu einer punktuellen Überlastung des Presswerkzeugs kommen. Die Verpressung wird im Wesentlichen ordnungsgemäß durchgeführt, so dass die Überlastung nicht ohne weiteres erkannt werden kann. Mit der gegenständlichen Weiterbildung lässt sich eine solche Situation erkennen und der Servicezeitpunkt entsprechend anpassen.

Weiters kann vorgesehen sein, dass die Kraftwirkung in Kraftwirkbereiche mit einer unteren und einer oberen Bereichsgrenze unterteilt ist und dass der Werkzeug-Service-Stand aufgrund der Einsatzzeit oder Einsatzanzahl in den jeweiligen Kraftwirkbereichen ermittelt wird. Die Kraftwirkbereiche können beispielsweise aufgeteilt sein in einen ersten Bereich von IN-ION, einen zweiten Bereich von größer 10N bis 20N, einen dritten Bereich von größer 20N bis 30N, usw. Die Bereiche können natürlich frei festgelegt werden und müssen auch nicht zwingend gleich groß sein.

Dabei kann vorgesehen sein, dass die Anzahl der Zyklen in einem bestimmten Bereich nach einem vorgegebenen Schlüssel ausgewertet wird und der Werkzeug-Service-Stand auf Grundlage der Gesamtheit der Zyklen ermittelt wird. Beispielsweise kann vorgesehen sein, dass die Anzahl der durchlaufenen Zyklen des ersten Bereiches geringer bewertet wird als die Anzahl der durchlaufenen Zyklen des dritten Bereiches.

Neben einem maximalen absoluten Kraftwert, kann auch die Geschwindigkeit des Kraftanstiegs die Abnutzung bzw. Überlastung beschleunigen. Daher besteht einer Weiterbildung auch darin, dass als Kraftwirkung der Kraftanstieg ermittelt wird.

Vorteilhafte Weiterbildungen bestehen auch darin, dass vom Analyse- und Auswertemodul die ermittelte Einsatzzeit aufsummiert wird, und die gesamte Zeitdauer mit einem hinterlegten Zeitdauer-Grenzwert verglichen wird.

Und dass vom Analyse- und Auswertemodul die ermittelte Kraftwirkung aufsummiert wird und die Gesamtkraft mit einem hinterlegten Gesamtkraft-Grenzwert verglichen wird.

Und dass vom Analyse- und Auswertemodul die ermittelte Maximalkraft mit einem hinterlegten Maximalkraft-Grenzwert verglichen wird.

Und dass vom Analyse- und Auswertemodul der ermittelte maximale Kraftanstieg mit einem hinterlegten Kraftanstiegs-Grenzwert verglichen wird.

Bei Überschreitung des jeweiligen hinterlegten Grenzwertes, wird der Werkzeug-Service-Stand aktualisiert.

Durch den Vergleich mit einem jeweils hinterlegten Grenzwert kann der Werkzeug-Service-Stand nach einer festgelegten Einsatzdauer, nach der gesamten übertragenen Kraft, bei großer punktueller Überlastung und/oder bei einer zu starken dynamischen Belastung entsprechend aktualisiert werden. Somit ist gewährleistet, dass eine maximale Anzahl von Parameter berücksichtigt wird, die sich auf die sichere Nutzungsdauer eines Presswerkzeugs auswirken.

Die Aufgabe der Erfindung wird auch durch eine Fügepresse gelöst, insbesondere durch eine Crimp-Presse, welche zur Durchführung des gegenständlichen Verfahrens ausgebildet ist. Die Fügepresse umfasst ein Maschinengestell, mit einem darin gehaltenen Presswerkzeug, welches Presswerkzeug einen Gegenhalter und ein Drückwerkzeug aufweist. Ferner ist ein Druckmittel mit einer Steuerungsvorrichtung vorhanden, welche Steuerungsvorrichtung zur Steuerung des Druckmittels zur Durchführung der Verpressung ausgebildet ist, und wobei das Drückwerkzeug relativ zum Gegenhalter, zwischen einer Manipulations- und einer Arbeitsposition bewegbar ausgebildet ist. Das Druckmittel ist durch einen Spreizantrieb gebildet, welcher auf das Drückwerkzeug wirkt. Die Steuerungsvorrichtung weist ferner einen Einsatzdauer-Zeitgeber auf. An der Fügepresse ist eine Kraft-Messvorrichtung angeordnet, welche mit einem Sensoreingang der Steuervorrichtung verbunden ist. Ferner weist die Steuerungsvorrichtung ein Analyse- und Auswertemodul auf, welches mit dem Sensoreingang und dem Einsatzdauer-Zeitgeber verbunden ist. Ferner ist am Presswerkzeug ein Speicherchip, insbesondere ein RFID-Chip an-geordnet, wobei die Steuerungsvorrichtung zum Speichern und Abfragen des aktuellen Werkzeug-Service-Standes am Speicherchip ausgebildet ist. Die Steuerungsvorrichtung weist einen Signalausgang auf, der zur Abgabe eines Werkzeug-Service-Stands ausgebildet ist.

Von Vorteil ist eine Weiterbildung, nach der die Kraft-Messvorrichtung am Drückwerkzeug angeordnet ist. Dadurch erfolgt die Bestimmung der auftretenden Kraft unmittelbar im Arbeitsbereich, so dass die real auf das Drückwerkzeug wirkende Kraft sehr genau bestimmt werden kann.

Eine Verfeinerung der Ermittlung der auftretenden Belastung wird mit einer Weiterbildung erreicht, nach der das Drückwerkzeug mehrere Drückteile aufweist, wobei die Kraft-Messvorrichtung zumindest an einem Drückteil angeordnet ist.

Die Bestimmung der auftretenden Belastung kann auch indirekt über die Ermittlung der Belastung des Antriebs erfolgen, da die Antriebsarbeit des Motors in eine Druckkraft auf das Drückwerkzeug umgelenkt wird. Gemäß einer Weiterbildung ist nun vorgesehen, dass die Kraft-Messvorrichtung durch eine Drehzahl- Messvorrichtung des Motors, oder durch eine Stromaufnahme-Messvorrichtung des als Elektromotor ausgebildeten Motors gebildet ist. Beispielsweise kann über den Grad der sinkenden Drehzahl bei gleichbleibender Versorgung bzw. über einen Stromanstieg, auf die Belastung auf das Drückwerkzeug geschlossen werden.

Nach einer Weiterbildung kann auch vorgesehen sein, dass die Kraft-Messvorrichtung in einem Abschnitt des Drückwerkzeugs angeordnet ist, welcher Abschnitt das zu pressende Werkteil kontaktiert. Beispielsweise kann die Kraft-Messvorrichtung als piezoelektrisches Element ausgebildet sein, welche eine, der einwirkenden Kraft proportionale Spannung abgibt.

Ähnlich zur vorherigen Weiterbildung kann auch vorgesehen sein, dass die Kraft-Messvorrichtung zwischen Druckmittel und Drückwerkzeug angeordnet ist.

Zum besseren Verständnis der Erfindung wird diese anhand der nachfolgenden Figuren näher erläutert.

Es zeigt in stark vereinfachter, schematischer Darstellung:

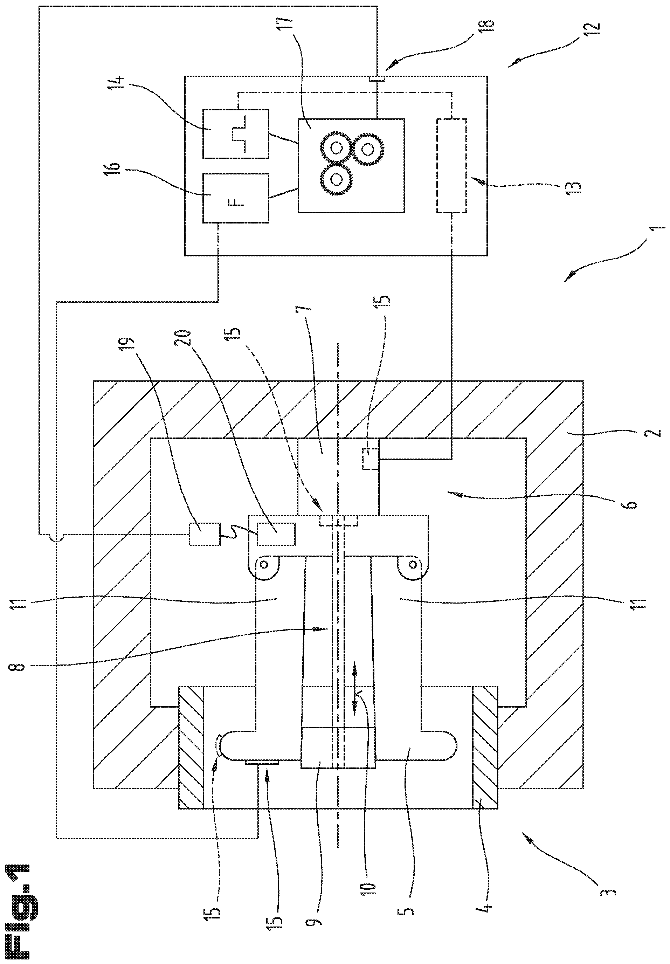

- Fig. 1: die gegenständliche Fügepresse.

Fig. 1 zeigt eine schematische Darstellung einer gegenständlichen Fügepresse 1, umfassend ein Maschinengestell 2 mit einem darin gehaltenen Presswerkzeug 3, welches Presswerkzeug einen Gegenhalter 4 und ein Drückwerkzeug 5 aufweist. Das Presswerkzeug 3 ist aus dem Maschinengestell 2 herausnehmbar, wobei vorgesehen sein kann, dass ein Presswerkzeug 3 in verschiedenen Maschinengestellen 2 eingesetzt werden kann. Weiters kann vorgesehen sein, dass in einem Maschinengestell 2 verschiedene Presswerkzeuge 3 gespannt werden können, welche beispielsweise für die Verpressung von verschieden großen Werkstücken ausgebildet sind. Ferner ist ein Druckmittel 6 vorhanden, welches Druckmittel 6 durch einen Spreizantrieb gebildet ist.

Der Spreizantrieb kann beispielsweise durch einen Hydraulikzylinder gebildet sein, welcher durch ein externes Hydraulikaggregat versorgt wird. In einer weiteren Ausführungsvariante kann vorgesehen sein, dass der Spreizantrieb einen Motor 7 aufweist, dessen Rotationsbewegung mittels einer Spindel 8 und einer Spindelmutter 9 in eine Axialbewegung 10 umgewandelt werden kann. Die axiale Bewegung der Spindelmutter 9 wirkt dabei auf das Drückwerkzeug 5 und presst das Drückwerkzeug 5 bzw. die Drückteile 11 in Richtung des Gegenhalters 4. Da im Bereich zwischen dem Drückwerkzeug 5 und dem Gegenhalter 4 das zu verpressende Werkteil angeordnet ist, führt diese nach außen Bewegung des Drückwerkzeugs zur Durchführung der Verpressung am Werkteil. Darüber hinaus kann das Drückwerkzeug 5 durch weitere aus dem Stand der Technik bekannte Mechanismen angetrieben werden.

Das Druckmittel 6 ist ferner mit einer Steuerungsvorrichtung 12 verbunden, welche Steuerungsvorrichtung bevorzugt eine maschinenspezifische Ablaufsteuerung 13 aufweist, welche den Antrieb, beispielsweise den Motor 7 zur Durchführung der Fügeverpressung gemäß werkstückrelevanter Vorgaben ansteuert. Auf diese Ablaufsteuerung 13 wird hierin nicht weiter eingegangen, da sie für das gegenständliche Verfahren bzw. für die gegenständliche Fügepresse 1 nur dahingehend relevant ist, die einzelnen Komponenten der Fügepresse 1 derart anzusteuern, dass die Fügeverpressung durchgeführt wird. Mit dieser Ablaufsteuerung 13 in Verbindung steht ein Einsatzdauer-Zeitgeber 14, welcher die Anzahl und gegebenenfalls die Dauer der einzelnen Fügeverpressung erfasst.

Bei der gegenständlichen Ausführung ist ferner eine Kraft-Messvorrichtung 15 vorhanden, welche gemäß einer Ausführung am Drückwerkzeug 5, insbesondere an einem vorderen Ende des Drückteils 11, angeordnet sein kann. In der Figur sind ferner weitere mögliche Anordnungen der Kraftmessvorrichtung 15 dargestellt, beispielsweise kann diese in einem Abschnitt des Drückwerkzeugs 5 angeordnet sein, welcher Abschnitt das zu pressende Werkteil kontaktiert. Auch ist eine Anordnung am Antrieb, beispielsweise am Motor 7 bzw. im Bereich der Spindel 8 möglich, wobei hier indirekt über die Erfassung einer Drehzahl bzw. eines Drehmoments und/oder der Erfassung einer Stromaufnahme, oder beispielsweise auch von einem anliegenden Hydraulikdruck auf die vom Drückwerkzeug 5 auf das Werkteil übertragene Kraft geschlossen werden kann.

Die Kraft-Messvorrichtung 15 ist mit einem Sensoreingang 16 der Steuerungsvorrichtung 12 verbunden, wobei von diesem Sensoreingang 16 eine Umwandlung des von der Kraft-Messvorrichtung 15 gelieferten Rohwertes, in eine weiter verarbeitbare Größe erfolgt. Der Sensoreingang 16 und der Einsatzdauer-Zeitgeber 14 sind mit einem Analyse- und Auswertemodul 17 der Steuerungsvorrichtung 12 verbunden. Von diesem Modul wird sowohl die vom Einsatzdauer-Zeitgeber 14 ermittelte Einsatzzeit des Presswerkzeugs 3, als auch die vom Sensoreingang 16 ermittelte real wirkende Kraft jeder einzelnen Fügeverpressung analysiert, bewertet und mit hinterlegten Grenzwerten verglichen. Ergebnis dieser laufenden Analyse und Auswertung ist ein Werkzeug-Service-Stand, welches an einem Signalausgang 18 bereitsteht und von einer Zugriffsvorrichtung 19 am Speicherchip 20 hinterlegt. Die Übertragung zwischen der Zugriffsvorrichtung 19 und dem Speicherchip 20 erfolgt bevorzugt drahtlos, wobei auch eine drahtgebundene Kommunikation möglich ist.

Eine drahtlose Kommunikation kann beispielsweise über Funkwellen oder magnetische Felder erfolgen. Zur drahtgebundenen Kommunikation kann beispielsweise vorgesehen sein, dass eine Steckerpaarung ausgebildet ist, wobei ein erster Stecker am Presswerkzeug 3 angeordnet ist und ein Gegenstecker an der Fügepresse 1 angeordnet ist. Beim Einsetzen des Presswerkzeuges 3 in die Fügepresse 1 kann die Verbindung zwischen den beiden Steckern hergestellt werden.

Mit diesem Werkzeug-Service-Stand wird vom Analyse- und Auswertemodul 17 angezeigt bzw. protokolliert, wann ein Presswerkzeug 3 gewartet bzw. ausgetauscht werden muss und zwar unter Berücksichtigung sowohl der Einsatzdauer bzw. der Summe der durchgeführten Verpressungen, als auch im Hinblick auf die gesamte übertragene Kraft.

Mit der gegenständlichen Fügepresse 1 bzw. dem gegenständlichen Verfahren ist es in vorteilhafter Weise möglich, ein Presswerkzeug solange als möglich im Einsatz zu halten und dabei Anforderungen hinsichtlich Verschleiß bzw. Beanspruchung zu berücksichtigen. Dadurch wird insbesondere erreicht, dass eine versteckte Abnützung, insbesondere aufgrund einer kraftbedingten Überlastung, rechtzeitig erkannt wird und somit die Gefahr einer übermäßigen Abnützung bzw. eines Werkzeugbruches vermieden wird und über die gesamte Einsatzdauer des Presswerkzeugs eine gleichbleibende Qualität der Fügeverpressung erreicht wird.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Des Weiteren können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus der gegenständlichen Fügepresse, diese bzw. deren Bestandteile teilweise unmaßstäblich und/oder vergrößert und/oder verkleinert dargestellt wurden.

### Bezugszeichenaufstellung

- 1: Fügepresse
- 2: Maschinengestell
- 3: Presswerkzeug
- 4: Gegenhalter
- 5: Drückwerkzeug
- 6: Druckmittel
- 7: Motor
- 8: Spindel
- 9: Spindelmutter
- 10: Axialbewegung
- 11: Drückteil
- 12: Steuerungsvorrichtung
- 13: Ablaufsteuerung
- 14: Einsatzdauer-Zeitgeber
- 15: Kraft-Messvorrichtung
- 16: Sensoreingang
- 17: Analyse- und Auswertemodul
- 18: Signalausgang
- 19: Zugriffsvorrichtung
- 20: Speicherchip

## Patentansprüche

1. Verfahren zur Ermittlung einer Einsatzkennzahl eines Presswerkzeugs (3) in einer Fügepresse (1), insbesondere eines Crimp-Werkzeugs in einer Crimp-Presse,
umfassend die Schritte,
dass von einem Einsatzdauer-Zeitgeber (14) einer Steuerungsvorrichtung (12) der Fügepresse (1), eine Einsatzzeit ermittelt wird,
und dass von einem Analyse- und Auswertemodul (17) der Steuerungsvorrichtung (12) ein Werkzeug-Service-Stand des Presswerkzeuges (3) ermittelt wird
und dass von dem Analyse- und Auswertemodul (17) der Steuerungsvorrichtung (12) der Werkzeug-Service-Stand des Presswerkzeuges (3) auf einen am Presswerkzeug (3) angeordneten Speicherchip (20), insbesondere einen RFID-Chip, übertragen wird, und dass von einer, an der Fügepresse (1) angeordneten Kraft-Messvorrichtung (15), während der Durchführung der Verpressung, eine Kraftwirkung ermittelt wird, **dadurch gekennzeichnet dass** der Werkzeug-Service-Stand des Presswerkzeuges (3) aus der Einsatzzeit und der wirkenden Kraft ermittelt wird.

2. Verfahren nach Anspruch 1, **dadurch gekennzeichnet, dass** die Einsatzzeit als Dauer der Kraftwirkung ermittelt wird.

3. Verfahren nach Anspruch 1, **dadurch gekennzeichnet, dass** die Einsatzzeit als Anzahl der Verpressungsvorgänge ermittelt wird.

4. Verfahren nach einem der Ansprüche 1 bis 3, **dadurch gekennzeichnet, dass** als Kraftwirkung die Maximalkraft während eines Pressvorganges ermittelt wird.

5. Verfahren nach einem der Ansprüche 3 oder 4, **dadurch gekennzeichnet, dass** die Kraftwirkung in Kraftwirkbereiche mit einer unteren und einer oberen Bereichsgrenze unterteilt ist und dass der Werkzeug-Service-Stand aufgrund der Einsatzzeit oder Einsatzanzahl in den jeweiligen Kraftwirkbereichen ermittelt wird.

6. Verfahren nach einem der Ansprüche 1 bis 3, **dadurch gekennzeichnet, dass** als Kraftwirkung der Kraftanstieg ermittelt wird.

7. Verfahren nach einem der Ansprüche 1 bis 6, **dadurch gekennzeichnet, dass** vom Analyse- und Auswertemodul (17) die ermittelte Einsatzzeit aufsummiert wird, und die gesamte Zeitdauer mit einem hinterlegten Grenzwert verglichen wird und bei Überschreitung des Grenzwertes, der Werkzeug-Service-Stand erzeugt wird.

8. Verfahren nach einem der Ansprüche 1 bis 7, **dadurch gekennzeichnet, dass** vom Analyse- und Auswertemodul (17) die ermittelte Kraftwirkung aufsummiert wird und die Gesamtkraft mit einem hinterlegten Grenzwert verglichen wird und bei Überschreitung des Grenzwertes, der Werkzeug-Service-Stand aktualisiert wird.

9. Verfahren nach einem der Ansprüche 4 bis 8, **dadurch gekennzeichnet, dass** vom Analyse- und Auswertemodul (17) die ermittelte Maximalkraft mit einem hinterlegten Grenzwert verglichen wird und bei Überschreitung des Grenzwertes, der Werkzeug-Service-Stand aktualisiert wird.

10. Verfahren nach einem der Ansprüche 5 bis 9, **dadurch gekennzeichnet, dass** vom Analyse- und Auswertemodul (17) der ermittelte maximale Kraftanstieg mit einem hinterlegten Grenzwert verglichen wird und bei Überschreitung des Grenzwertes, der Werkzeug-Service-Stand aktualisiert wird.

11. Fügepresse (1), insbesondere eine Crimp-Presse zur Durchführung eines Verfahrens nach einem der Ansprüche 1 bis 10, umfassend
ein Maschinengestell (2), mit einem darin gehaltenen Presswerkzeug (3),
welches Presswerkzeug (3) einen Gegenhalter (4) und ein Drückwerkzeug (5) aufweist,
und ferner ein Druckmittel (6) mit einer Steuerungsvorrichtung (12) zur Steuerung des Druckmittels (6) zur Durchführung der Verpressung,
wobei das Drückwerkzeug (5) relativ zum Gegenhalter (4), zwischen einer Manipulations-und einer Arbeitsposition bewegbar ausgebildet sind,
und wobei das Druckmittel (6) durch einen Spreizantrieb gebildet ist, welcher auf das Drückwerkzeug (5) wirkt,
und wobei die Steuerungsvorrichtung (12) einen Einsatzdauer-Zeitgeber (14) aufweist,
und wobei die Steuerungsvorrichtung (12) ein Analyse- und Auswertemodul (17) aufweist,
und wobei am Presswerkzeug (3) ein Speicherchip (20), insbesondere ein RFID-Chip angeordnet ist, wobei die Steuerungsvorrichtung (12) zum Speichern und Abfragen des aktuellen Werkzeug-Service-Standes des Presswerkzeuges (3) am Speicherchip (20) ausgebildet ist, und
wobei die Steuerungsvorrichtung (12) einen Signalausgang (18) aufweist, der zur Abgabe eines Werkzeug-Service-Stands des Presswerkzeuges (3) ausgebildet ist, und wobei an der Fügepresse (1) eine Kraft-Messvorrichtung (15) angeordnet ist, welche mit einem Sensoreingang (16) der Steuervorrichtung verbunden ist, und
wobei das Analyse- und Auswertemodul (17) mit dem Sensoreingang (16) und dem Einsatzdauer-Zeitgeber (14) verbunden ist, **dadurch gekennzeichnet, dass** die Steuerungsvorrichtung (12) zum Speichern und Abfragen des aktuellen Werkzeug-Service-Standes des Presswerkzeuges (3), welcher aus der Einsatzzeit und der wirkenden Kraft ermittelt wird, am Speicherchip (20) ausgebildet ist.

12. Fügepresse nach Anspruch 11, **dadurch gekennzeichnet, dass** die Kraft-Messvorrichtung (15) am Drückwerkzeug (5) angeordnet ist.

13. Fügepresse nach Anspruch 11 oder 12, **dadurch gekennzeichnet, dass** das Drückwerkzeug (5) mehrere Drückteile (11) aufweist, wobei die Kraft-Messvorrichtung (15) zumindest an einem Drückteil (11) angeordnet ist.

14. Fügepresse nach einem der Ansprüche 11 bis 13, **dadurch gekennzeichnet, dass** die Kraft-Messvorrichtung (15) durch eine Drehzahl- Messvorrichtung des Motors (7), oder durch eine Stromaufnahme-Messvorrichtung des als Elektromotor ausgebildeten Motors (7) gebildet ist.

15. Fügepresse nach einem der Ansprüche 11 bis 14, **dadurch gekennzeichnet, dass** die Kraft-Messvorrichtung (15) in einem Abschnitt des Drückwerkzeugs (5) angeordnet ist, welcher Abschnitt das zu pressende Werkteil kontaktiert.

16. Fügepresse nach einem der Ansprüche 11 bis 15, **dadurch gekennzeichnet, dass** die Kraft-Messvorrichtung (15) zwischen Druckmittel (6) und Drückwerkzeug (5) angeordnet ist.

## Claims

1. A method for determining an operating parameter of a pressing tool (3) in a joining press (1), in particular of a crimp tool in a crimp press,
comprising the steps
that an operating time is determined by an operating duration timer (14) of a controller (12) of the joining press (1),
and that a tool service status of the pressing tool (3) is determined by an analysis and evaluation module (17) of the controller (12),
and that the tool service status of the pressing tool (3) is transmitted to a memory chip (20), in particular an RFID chip, arranged on the pressing tool (3) by the analysis and evaluation module (17) of the controller (12),
and that a force action is determined by a force measuring device (15) arranged on the joining press (1) during the performance of pressing, **characterized in that** the tool service status of the pressing tool (3) is determined from the operating time and the acting force.

2. The method according to claim 1, **characterized in that** the operating time is determined as the duration of the force action.

3. The method according to claim 1, **characterized in that** the operating time is determined as the number of pressing operations.

4. The method according to one of claims 1 to 3, **characterized in that** the maximum force during a pressing operation is determined as the force action.

5. The method according to one of claims 3 or 4, **characterized in that** the force action is divided into force action areas with a lower and an upper area limit and that the tool service status is determined based on the operating time or number of operations in the respective force action areas.

6. The method according to one of claims 1 to 3, **characterized in that** the increase in force is determined as the force action.

7. The method according to one of claims 1 to 6, **characterized in that** the determined operating time is added up by the analysis and evaluation module (17) and the overall duration is compared with a stored limit value and when the limit value is exceeded, the tool service status is generated.

8. The method according to one of claims 1 to 7, **characterized in that** the determined force action is added up by the analysis and evaluation module (17) and the overall force is compared with a stored limit value and when the limit value is exceeded, the tool service status is updated.

9. The method according to one of claims 4 to 8, **characterized in that** the determined maximum force is compared to a stored limit value by the analysis and evaluation module (17) and when the limit value is exceeded, the tool service status is updated.

10. The method according to one of claims 5 to 9, **characterized in that** the determined maximum increase in force is compared to a stored limit value by the analysis and evaluation module (17) and when the limit value is exceeded, the tool service status is updated.

11. A joining press (1), in particular a crimp press for carrying out a method according to one of claims 1 to 10, comprising
a machine frame (2) with a pressing tool (3) held therein, said pressing tool (3) comprising a counterhold (4) and a pusher tool (5),
and further a pressure means (6) having a controller (12) for controlling the pressure means (6) for carrying out the pressing,
wherein the pusher tool (5) is designed so as to be movable relative to the counterhold (4) between a manipulation and a working position,
and wherein the pressure means (6) is formed by an expander gear which acts on the pusher tool (5),
and wherein the controller (12) comprises an operating duration timer (14),
and wherein the controller (12) comprises an analysis and evaluation module (17), and wherein a memory chip (20), in particular an RFID chip, is arranged on the pressing tool (3), wherein the controller (12) is configured for storing and retrieving the current tool service status of the pressing tool (3) on/from the memory chip (20), and wherein the controller (12) comprises a signal output (18), which is configured to output a tool service status of the pressing tool (3),
and wherein
a force measuring device (15), which is connected to a sensor input (16) of the controller, is arranged on the joining press (1), and wherein the analysis and evaluation module (17) is connected to the sensor input (16) and the operating duration timer (14), **characterized in that** the controller (12) is configured for storing and retrieving the current tool service status of the pressing tool (3), which is determined from the operating time and the acting force, on/from the memory chip (20).

12. The joining press according to claim 11, **characterized in that** the force measuring device (15) is arranged on the pusher tool (5).

13. The joining press according to claim 11 or 12, **characterized in that** the pusher tool (5) comprises multiple pusher parts (11), wherein the force measuring device (15) is arranged at least one pusher part (11).

14. The joining press according to one of claims 11 to 13, **characterized in that** the force measuring device (15) is formed by a tachometer device of the motor (7), or by a current consumption measuring device of the motor (7) designed as an electric motor.

15. The joining press according to one of claims 11 to 14, **characterized in that** the force measuring device (15) is arranged in a section of the pusher tool (5) which section contacts the component to be pressed.

16. The joining press according to one of claims 11 to 15, **characterized in that** the force measuring device (15) is arranged between the pressure means (6) and the pusher tool (5).

## Revendications

1. Procédé de détermination d'une caractéristique d'utilisation d'un outil de moulage par compression (3) d'une presse d'assemblage (1), plus particulièrement d'un outil de sertissage dans une presse de sertissage, comprenant les étapes suivantes :
le temps d'utilisation est déterminé par un minuteur de durée d'utilisation (14) d'un dispositif de commande (12) de la presse d'assemblage (1),
et un état de service d'outil de l'outil de moulage par compression (3) est déterminé par un module d'analyse et d'évaluation (17) du dispositif de commande (12),
et l'état de service d'outil de l'outil de moulage par compression (3), déterminé par le module d'analyse et d'évaluation (17) du dispositif de commande (12), est transmis à une puce mémoire (20) disposée sur l'outil de moulage par compression (3), plus particulièrement une puce RFID,
et une force exercée est déterminée par un dispositif de mesure de force (15) disposé sur la presse d'assemblage (1), pendant l'exécution de la compression, **caractérisé en ce que** l'état de service d'outil de l'outil de moulage par compression (3) est déterminé à partir du temps d'utilisation et de la force exercée.

2. Procédé selon la revendication 1, **caractérisé en ce que** le temps d'utilisation est déterminé comme étant la durée de l'application de la force.

3. Procédé selon la revendication 1, **caractérisé en ce que** le temps d'utilisation est déterminé comme étant le nombre de processus de compression.

4. Procédé selon l'une des revendications 1 à 3, **caractérisé en ce que**, en tant que force exercée, la force maximale pendant un processus de compression est déterminée.

5. Procédé selon l'une des revendications 3 ou 4, **caractérisé en ce que** l'application de la force est divisée en zones d'application de force avec une limite de zone supérieure et inférieure et l'état de service d'outil est déterminé sur la base du temps d'utilisation ou du nombre d'utilisation dans les zones d'application de force respectives.

6. Procédé selon l'une des revendications 1 à 3, **caractérisé en ce que**, en tant qu'application de force, l'augmentation de la force est déterminée.

7. Procédé selon l'une des revendications 1 à 6, **caractérisé en ce que** le temps d'utilisation déterminé par le module d'analyse et d'évaluation (17) cumule le temps d'utilisation déterminé et la durée d'utilisation totale est comparée avec une valeur limite enregistrée et, lors d'un dépassement de la valeur limite, l'état de service d'outil est généré.

8. Procédé selon l'une des revendications 1 à 7, **caractérisé en ce que** le module d'analyse et d'évaluation (17) cumule l'application de force déterminée et la force totale est comparée avec une valeur limite enregistrée et, lors d'un dépassement de la valeur limite, l'état de service d'outil est actualisé.

9. Procédé selon l'une des revendications 4 à 8, **caractérisé en ce que** le module d'analyse et d'évaluation (17) compare la force maximale déterminée avec une valeur limite enregistrée et, lors d'un dépassement de la valeur limite, l'état de service d'outil est actualisé.

10. Procédé selon l'une des revendications 5 à 9, **caractérisé en ce que** le module d'analyse et d'évaluation (17) compare l'augmentation de la force maximale déterminée avec une valeur limite enregistrée et, lors d'un déplacement de la valeur limite, l'état de service d'outil est actualisé.

11. Presse d'assemblage (1), plus particulièrement presse de sertissage, pour l'exécution d'un procédé selon l'une des revendications 1 à 10, comprenant :
un bâti de machine (2), avec un outil de moulage par compression (3) contenu à l'intérieur,
cet outil de moulage par compression (3) comprenant un contre-support (4) et un outil de compression (5) et en outre un moyen de compression (6) avec un dispositif de commande (12) pour le contrôle du moyen de compression (6) pour l'exécution de la compression,
dans lequel l'outil de compression (5) est conçu de façon à être mobile par rapport au contre-support (4), entre une position de manipulation et une position de travail,
et dans lequel le moyen de compression (6) est constitué d'un entraînement d'écartement qui agit sur l'outil de compression (5),
et dans lequel le dispositif de commande (12) comprend un minuteur de durée d'utilisation (14),
et dans lequel le dispositif de commande (12) comprend un module d'analyse et
d'évaluation (17),
et dans lequel, sur l'outil de moulage par compression (3), est disposée une puce mémoire (20), plus particulièrement une puce RFID, dans lequel le dispositif de commande (12) est conçu pour l'enregistrement et la lecture de l'état de service d'outil actuel de l'outil de moulage par compression (3) sur la puce mémoire (20) et
dans lequel le dispositif de commande (12) comprend une sortie de signal (18) qui est conçue pour la sortie de l'état de service d'outil de l'outil de moulage par compression (3),
et dans lequel, sur la presse d'assemblage (1), est disposé un dispositif de mesure de force (15), qui est relié avec une entrée de capteur (16) du dispositif de commande et
dans lequel le module d'analyse et d'évaluation (17) est relié avec l'entrée de capteur (16) et le minuteur de durée d'utilisation (14), **caractérisé en ce que** le dispositif de commande (12) est conçu pour l'enregistrement et la lecture de l'état de service d'outil actuel de l'outil de moulage par compression (3), qui est déterminé à partir du temps d'utilisation et de la force exercée, sur la puce mémoire (20).

12. Presse d'assemblage selon la revendication 11, **caractérisée en ce que** le dispositif de mesure de force (15) est disposé sur l'outil de compression (5).

13. Presse d'assemblage selon la revendication 11 ou 12, **caractérisée en ce que** l'outil de compression (5) comprend plusieurs pièces de compression (11), dans lequel le dispositif de mesure de force (15) est disposé au moins sur une pièce de compression (11).

14. Presse d'assemblage selon l'une des revendications 11 à 13, **caractérisée en ce que** le dispositif de mesure de force (15) est constitué d'un dispositif de mesure de vitesse de rotation du moteur (7) ou d'un dispositif de mesure de consommation de courant du moteur (7) conçu comme un moteur électrique.

15. Presse d'assemblage selon l'une des revendications 11 à 14, **caractérisée en ce que** le dispositif de mesure de force (15) est disposé dans une portion de l'outil de compression (5), cette portion étant en contact avec la pièce à compresser.

16. Presse d'assemblage selon l'une des revendications 11 à 15, **caractérisée en ce que** le dispositif de mesure de force (15) est disposé entre le moyen de compression (6) et l'outil de compression (5).
